# EUROPEAN PATENT SPECIFICATION

(11) **EP 4 425 842 B1**
(45) Date of publication and mention of the grant of the patent: **30.09.2026**
(21) Application number: 23159808.7
(22) Date of filing: 03.03.2023
(51) Int. Cl.: H04L 12/12

(54) **MEASUREMENT DEVICE BEING ACTIVATABLE VIA WAKE-ON NETWORK CAPABILITIES**
ÜBER AUFWECKNETZWERKFUNKTIONEN AKTIVIERBARE MESSVORRICHTUNG
DISPOSITIF DE MESURE POUVANT ÊTRE ACTIVÉ PAR L'INTERMÉDIAIRE DE CAPACITÉS DE RÉSEAU DE RÉVEIL

(43) Date of publication of application: 04.09.2024
(73) Proprietor: Rohde & Schwarz GmbH & Co. KG, 81671 München (DE)
(72) Inventor: El-Assir, Rachid, 81825 Munich (DE)
(74) Representative: Novagraaf Group

(56) References cited:
- EP-A1- 2 056 480
- EP-A1- 3 788 956
- WO-A2-2007/104152

## Description

The invention relates to a measurement device being activatable via wake-on network capabilities. In particular, the invention relates to a measurement device being remotely activatable via wake-on network capabilities, especially wake-on local area network (LAN), and being remotely controllable, a method for remotely operating a measurement device, a computer-readable medium storing computer-executable instructions for performing said method, and a measurement system.

Generally, in times of an increasing number of tests and measurements being performed remotely, there is a growing need of a measurement device, a method for remotely operating a measurement device, a computer-readable medium storing computer-executable instructions for performing said method, and a measurement system for performing such remote tests and measurements in a highly efficient and energy-saving manner.

Document US 6,477,602 B1 relates to the detection of the presence of a connector in a socket, the connector keeping a pin of the socket to a given level. Said document suggests to take advantage of this for detecting the presence of the connector, by trying to pull the pin to another-level, and determining whether the level on the pin is the given level or the other level.

Furthermore, KR 10-1782977 B1 and WO 2007/104152 A1 disclose an apparatus for reducing power consumption of a power measurement system by using a measured power value. More specifically, said apparatus comprises a load power measurement system which is installed on a distribution board for supplying power which measures power consumption of a main inlet terminal of the distribution board, and performs a control function corresponding to the measured power consumption; and a plurality of feeder sensors which are connected to the load power measurement system, communicating with the load power measurement system, measuring current consumption of each load terminal, and transmitting the current consumption to the load power measurement system. The load power measurement system monitors the power consumption of the main inlet terminal of the distribution board, analyzing the data measured of load power consumption collected by each of the plurality of feeder sensors, and performs a power switching control for reducing power consumption. Disadvantageously, such a configuration does not allow for particularly efficient and energy-saving tests and measurements.

Accordingly, there is the object to provide a measurement device, a method for remotely operating a measurement device, a computer-readable medium storing computer-executable instructions for performing said method, and a measurement system, thereby ensuring a particularly high efficiency and saving of energy.

This object is solved by the features of the first independent claim for a measurement device, the features of the second independent claim for a method for remotely operating a measurement device, the features of the third independent claim for a computer-readable medium storing computer-executable instructions for performing said method, and the features of the fourth independent claim for a measurement system. The dependent claims contain further developments.

According to a first aspect of the invention, a measurement device is provided. Said measurement device comprises a wake-on network unit for remotely activating the measurement device, and a remote control interface for controlling the functions and/or settings of the measurement device remotely after the measurement device has been activated through the wake-on network unit. Advantageously, remote tests and measurements can be performed in a highly efficient and energy-saving manner. Further advantageously, the measurement device can remotely be powered on when needed and powered off when no more needed, thereby not only saving energy but also prolonging the life of the measurement device.

As an additional advantage, it is noted that the measurement device does not need to provide a standby operating mode because in the sense of the invention, the measurement device is switched off when it is not needed, whereas the wake-on network unit waits at an ultra-low power state for a respective activation message from the corresponding network, especially from the corresponding communication network.

According to a first preferred implementation form of the first aspect of the invention, the wake-on network unit comprises or is a wake-on local area network unit. Advantageously, for instance, a user datagram protocol packet sent over the corresponding network, especially corresponding communication network, can be used for remotely activating the measurement device, thereby increasing efficiency. Accordingly, the above-mentioned activation message may comprise or be such a user datagram protocol packet.

According to a second preferred implementation form of the first aspect of the invention, the measurement device and/or the wake-on network unit comprises a remote controllable power socket. Advantageously, for example, additional and/or peripheral measurement equipment can be connected to said remote controllable power socket. Accordingly, further advantageously, said additional and/or peripheral measurement equipment can remotely be activated like the measurement device.

According to a further preferred implementation form of the first aspect of the invention, the wake-on network unit is configured to extract energy from the corresponding network, especially from the corresponding communication network, and to supply the measurement device with power on the basis of said energy. Advantageously, for instance, a mains power line can be omitted. Further advantageously, the measurement device may comprise an energy storage especially for buffering the extracted energy.

In addition to this or as an alternative, it is noted that it might be particularly advantageous if the wake-on network unit is configured to extract energy from the corresponding network, especially from the corresponding communication network, and to supply the remote controllable power socket with power on the basis of said energy.

According to a further preferred implementation form of the first aspect of the invention, the wake-on network unit comprises a Power over Ethernet port. Advantageously, for example, energy can be extracted from the corresponding Ethernet network for supplying the measurement device and/or the remote controllable power socket.

According to a further preferred implementation form of the first aspect of the invention, the measurement device comprises or is a spectrum analyzer especially used to measure the frequency and/or power of signals in wireless communication systems. Advantageously, for instance, a particularly high flexibility can be ensured, which analogously applies for each of the further preferred implementation forms of the first aspect of the invention as described below.

According to a further preferred implementation form of the first aspect of the invention, the measurement device comprises or is a signal generator especially used to generate test signals for testing and/or calibrating communication systems.

According to a further preferred implementation form of the first aspect of the invention, the measurement device comprises or is a network analyzer especially used to measure the characteristics of communication networks such as frequency response and/or insertion loss.

According to a further preferred implementation form of the first aspect of the invention, the measurement device comprises or is an oscilloscope especially used to measure the voltage and/or time-domain characteristics of electrical signals.

According to a further preferred implementation form of the first aspect of the invention, the measurement device comprises or is a signal analyzer especially used to analyze and/or measure complex signals in wireless communication systems.

According to a further preferred implementation form of the first aspect of the invention, the measurement device comprises or is a power meter and/or a sensor especially used to measure the power of radio frequency and/or microwave signals.

According to a further preferred implementation form of the first aspect of the invention, the measurement device comprises or is a vector network analyzer especially used to measure the scattering parameters of microwave components.

According to a second aspect of the invention, a method for remotely operating a measurement device is provided. Said method comprises the steps of remotely activating the measurement device through a wake-on network unit of the measurement device, and using a remote control interface of the measurement device to remotely control the functions and/or settings of the measurement device after the measurement device has been activated. Advantageously, remote tests and measurements can be performed in a highly efficient and energy-saving manner.

According to a third aspect of the invention, a computer-readable medium is provided. Said computer-readable medium stores computer-executable instructions for performing the method according to the second aspect of the invention when executed by a computer. Advantageously, remote tests and measurements can be performed in a highly efficient and energy-saving manner.

According to a fourth aspect of the invention, a measurement system is provided. Said measurement system comprises at least one measurement device according to the first aspect of the invention or any of its preferred implementation forms, respectively, and a remote control device communicating with the Internet and/or at least one of the at least one measurement device. Advantageously, remote tests and measurements can be performed in a highly efficient and energy-saving manner.

Exemplary embodiments of the invention are now further explained with respect to the drawings by way of example only, and not for limitation. In the drawings:
- Fig. 1: shows an exemplary embodiment of an inventive measurement device;
- Fig. 2: shows a flow chart of an embodiment of the second aspect of the invention; and
- Fig. 3: shows an exemplary embodiment of the inventive measurement system.

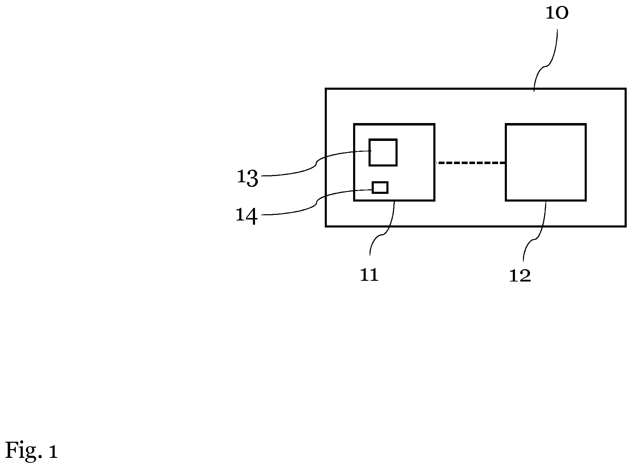

With respect to Fig. 1, a block diagram of an exemplary embodiment of a measurement device 10 is shown.

Said measurement device 10 comprises a wake-on network unit 11 for remotely activating the measurement device 10, and a remote control interface 12 for controlling the functions and/or settings of the measurement device 10 remotely after the measurement device 10 has been activated through the wake-on network unit 11.

It is noted that wake-on network unit 11 may be in connection with the remote control interface 12. Especially in the case that the wake-on network unit 11 is connected to the remote control interface 12, the functions and/or settings of the measurement device 10 may remotely be controlled via the corresponding network, especially via the corresponding communication network, to which the wake-on network unit 11 is connected.

Additionally or alternatively, the functions and/or settings of the measurement device 10 may remotely be controlled in a wireless and/or wired manner especially not via the corresponding network to which the wake-on network unit 11 is connected.

It is further noted that it might be particularly advantageous if the wake-on network unit 11 comprises or is a wake-on local area network (LAN) unit.

As it can further be seen from Fig. 1, the wake-on network unit 11 comprises a remote controllable power socket 13. For instance, additional and/or peripheral measurement equipment can be supplied by said remote controllable power socket 13. Accordingly, power regarding said additional and/or peripheral measurement equipment can by remotely switched on without providing wake-on network capabilities of said additional and/or peripheral measurement equipment by itself.

In addition to this or as an alternative, it is noted that the measurement device 10 may comprise a remote controllable power socket such as the above-mentioned remote controllable power socket 13.

Moreover, the wake-on network unit 11 exemplarily comprises a Power over Ethernet (PoE) port 14. In this context, the wake-on network unit 11 may preferably be configured to extract energy from the corresponding network, especially communication network or Ethernet network, respectively, and to supply the measurement device 10 with power on the basis of said energy.

Additionally or alternatively, the wake-on network unit 11 may preferably be configured to extract energy from the corresponding network, especially communication network or Ethernet network, respectively, and to supply the remote controllable power socket 13 with power on the basis of said energy.

It is noted that it might be particularly advantageous if the measurement device 10 comprises or is a spectrum analyzer especially used to measure the frequency and/or power of signals in wireless communication systems.

Furthermore, the measurement device 10 may comprise or be a signal generator especially used to generate test signals for testing and/or calibrating communication systems.

Moreover, the measurement device 10 may comprise or be a network analyzer especially used to measure the characteristics of communication networks such as frequency response and/or insertion loss.

Additionally or alternatively, the measurement device 10 may comprise or be an oscilloscope especially used to measure the voltage and/or time-domain characteristics of electrical signals.

Further additionally or further alternatively, the measurement device 10 may comprise or be a signal analyzer especially used to analyze and/or measure complex signals in wireless communication systems.

In further addition to this or as a further alternative, the measurement device 10 may comprise or be a power meter and/or a sensor especially used to measure the power of radio frequency and/or microwave signals.

It is further noted that it might be particularly advantageous if the measurement device 10 comprises or is a vector network analyzer especially used to measure the scattering parameters of microwave components.

On the basis of the explanations above, it is noted that it might basically be advantageous if the measurement device 10 is selected from the group of spectrum analyzers, especially used to measure the frequency and power of signals in wireless communication systems, signal generators, especially used to generate test signals for testing and calibrating communication systems, network analyzers, especially used to measure the characteristics of communication networks, such as frequency response and insertion loss, oscilloscopes, especially used to measure the voltage and time-domain characteristics of electrical signals, signal analyzers, especially used to analyze and measure complex signals in wireless communication systems, power meters and/or sensors, especially used to measure the power of radio frequency and microwave signals, and/or vector network analyzers, especially used to measure the scattering parameters of microwave components.

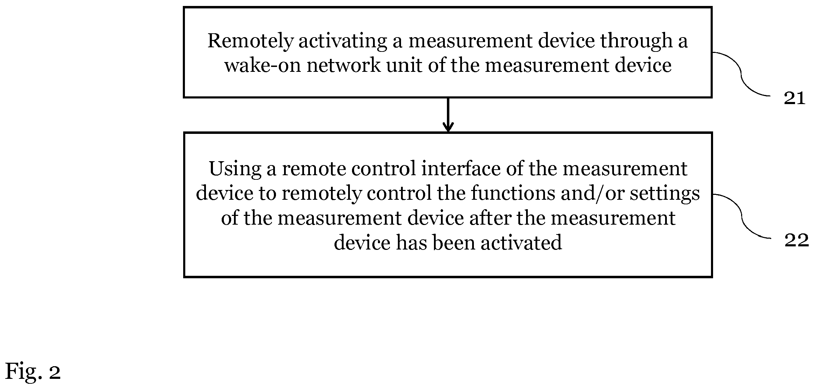

Now, with respect to Fig. 2, a flow chart of an embodiment of the inventive method for remotely operating a measurement device, such as the measurement device 10 according to Fig. 1, is illustrated.

A first step 21 of said method comprises remotely activating the measurement device through a wake-on network unit of the measurement device. Additionally, a second step 22 comprises using a remote control interface of the measurement device to remotely control the functions and/or settings of the measurement device after the measurement device has been activated.

With respect to the wake-on network unit, it is noted that it might be particularly advantageous if the wake-on network unit comprises or is a wake-on local area network unit.

It is further noted that it might be particularly advantageous if the measurement device and/or the wake-on network unit comprises a remote controllable power socket such as the remote controllable power socket 13 of Fig. 1.

In this context, the method may further comprise the step connecting additional and/or peripheral measurement equipment to the remote controllable power socket. Furthermore, the method may comprise the step of remotely activating the additional and/or peripheral measurement equipment especially with the aid of the measurement device and/or the wake-on network unit.

It is noted that it might be particularly advantageous if the wake-on network unit is configured to extract energy from the corresponding network, especially from the corresponding communication network, and to supply the measurement device with power on the basis of said energy.

In other words, the method may further comprise the step of extracting energy from the corresponding network, especially from the corresponding communication network, with the aid of the wake-on network unit. Moreover, the method may comprise the step of supplying the measurement device and/or the remote controllable power socket with power on the basis of said energy.

Especially in this context, it is noted that it might be particularly advantageous if the wake-on network unit comprises a Power over Ethernet port such as the Power over Ethernet port 14 according to Fig. 1.

It is further noted that it might be particularly advantageous if the measurement device comprises or is a spectrum analyzer especially used to measure the frequency and/or power of signals in wireless communication systems.

Furthermore, the measurement device may comprise or be a signal generator especially used to generate test signals for testing and/or calibrating communication systems.

Moreover, the measurement device may comprise or be a network analyzer especially used to measure the characteristics of communication networks such as frequency response and/or insertion loss.

Additionally or alternatively, the measurement device may comprise or be an oscilloscope especially used to measure the voltage and/or time-domain characteristics of electrical signals.

Further additionally or further alternatively, the measurement device may comprise or be a signal analyzer especially used to analyze and/or measure complex signals in wireless communication systems.

In further addition to this or as a further alternative, the measurement device may comprise or be a power meter and/or a sensor especially used to measure the power of radio frequency and/or microwave signals.

It is further noted that it might be particularly advantageous if the measurement device comprises or is a vector network analyzer especially used to measure the scattering parameters of microwave components.

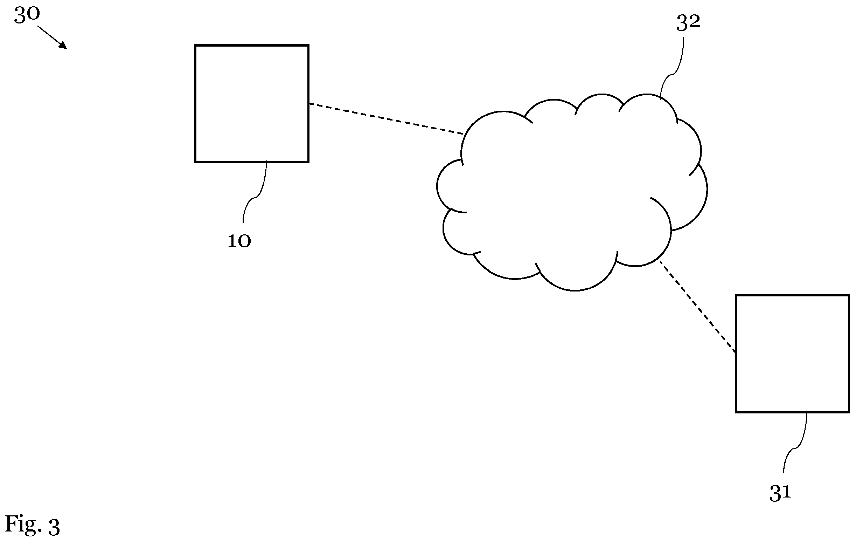

Finally, with respect to Fig. 3, an exemplary embodiment of an inventive measurement system 30 is depicted.

Exemplarily, said measurement system 30 comprises the measurement device 10 according to Fig. 1, and a remote control device 31 communicating with the measurement device 10 over the Internet 32.

In addition to this or as an alternative, it is noted that the remote control device 31 can directly communicate with the measurement device.

In other words, it might be particularly advantageous if the remote control device 31 communicates with the Internet 32 and/or the measurement device 10.

Furthermore, with respect to the remote control device 31, it is noted that said remote control device 31 may be configured to remotely activate the measurement device 10 especially via the wake-on network unit 11, which is not explicitly shown in Fig. 3, of the measurement device 10.

Additionally or alternatively, the remote control device 31 may be configured to control the functions and/or settings of the measurement device 10 remotely especially via the remote control interface 12, which is not explicitly shown Fig. 3, of the measurement device 10 preferably after the measurement device 10 has been activated through the wake-on network unit 11.

In further addition to this or as a further alternative, it is noted that it might be particularly advantageous if the remote control device 31 comprises or is at least one of a computer, especially a personal computer, a tablet, a smartphone, a measurement device, or any combination thereof.

While various embodiments of the present invention have been described above, it should be understood that they have been presented by way of example only, and not limitation.

In addition, while a particular feature of the invention may have been disclosed with respect to only one of several implementations, such feature may be combined with one or more other features of the other implementations as may be desired and advantageous for any given or particular application.

## Claims

1. A measurement device (10) comprising:
a wake-on network unit (11) for remotely activating the measurement device (10), and
a remote control interface (12) for controlling the functions and/or settings of the measurement device (10) remotely after the measurement device (10) has been activated through the wake-on network unit (11), **characterized in that** the wake-on network unit (11) comprises a Power over Ethernet port (14), and
wherein the wake-on network unit (11) is configured to extract energy from the corresponding Ethernet network and to supply the measurement device (10) with power on the basis of said energy.

2. The measurement device (10) according to claim 1, wherein the wake-on network unit (11) comprises or is a wake-on local area network unit.

3. The measurement device (10) according to claim 1 or 2, wherein the measurement device (10) and/or the wake-on network unit (11) comprises a remote controllable power socket (13).

4. The measurement device (10) according to any of the claims 1 to 3,
wherein the measurement device (10) comprises or is a spectrum analyzer especially used to measure the frequency and/or power of signals in wireless communication systems.

5. The measurement device (10) according to any of the claims 1 to 4,
wherein the measurement device (10) comprises or is a signal generator especially used to generate test signals for testing and/or calibrating communication systems.

6. The measurement device (10) according to any of the claims 1 to 5,
wherein the measurement device (10) comprises or is a network analyzer especially used to measure the characteristics of communication networks such as frequency response and/or insertion loss.

7. The measurement device (10) according to any of the claims 1 to 6,
wherein the measurement device (10) comprises or is an oscilloscope especially used to measure the voltage and/or time-domain characteristics of electrical signals.

8. The measurement device (10) according to any of the claims 1 to 7,
wherein the measurement device (10) comprises or is a signal analyzer especially used to analyze and/or measure complex signals in wireless communication systems.

9. The measurement device (10) according to any of the claims 1 to 8,
wherein the measurement device (10) comprises or is a power meter and/or a sensor especially used to measure the power of radio frequency and/or microwave signals.

10. The measurement device (10) according to any of the claims 1 to 9,
wherein the measurement device (10) comprises or is a vector network analyzer especially used to measure the scattering parameters of microwave components.

11. A method for remotely operating a measurement device (10), the method comprising the steps of:
remotely activating (21) the measurement device (10) through a wake-on network unit (11) of the measurement device (10), the wake-on network unit (11) **characterized by** comprising a Power over Ethernet port (14), and
using (22) a remote control interface (12) of the measurement device (10) to remotely control the functions and/or settings of the measurement device (10) after the measurement device (10) has been activated,
extracting energy from the corresponding Ethernet network with the aid of the wake-on network unit (11), and
supplying the measurement device (10) with power on the basis of said energy.

12. A computer-readable medium storing computer-executable instructions for performing the method of claim 11 when executed by a computer.

13. A measurement system (30) comprising:
at least one measurement device (10) according to any of the claims 1 to 10, and
a remote control device (31) communicating with the Internet (32) and/or at least one of the at least one measurement device (10).

## Patentansprüche

1. Messvorrichtung (10), umfassend:
eine Wake-on-Netzwerkeinheit (11) zum Fernaktivieren der Messvorrichtung (10), und
eine Fernsteuerungsschnittstelle (12) zum Fernsteuern der Funktionen und/oder Einstellungen der Messvorrichtung (10), nachdem die Messvorrichtung (10) durch die Wake-on-Netzwerkeinheit (11) aktiviert wurde,
**dadurch gekennzeichnet, dass**
die Wake-on-Netzwerkeinheit (11) einen Power-over-Ethernet-Anschluss (14) umfasst, und
wobei die Wake-on-Netzwerkeinheit (11) konfiguriert ist, um Energie aus dem entsprechenden Ethernet-Netzwerk zu extrahieren und um die Messvorrichtung (10) auf der Basis der Energie mit Leistung zu versorgen.

2. Messvorrichtung (10) nach Anspruch 1,
wobei die Wake-on-Netzwerkeinheit (11) eine Wake-on-Local-Area-Netzwerkeinheit umfasst oder ist.

3. Messvorrichtung (10) nach Anspruch 1 oder 2,
wobei die Messvorrichtung (10) und/oder die Wake-on-Netzwerkeinheit (11) eine fernsteuerbare Netzdose (13) umfasst.

4. Messvorrichtung (10) nach einem der Ansprüche 1 bis 3,
wobei die Messvorrichtung (10) einen Spektrumanalysator umfasst oder ein solcher ist, der insbesondere verwendet wird, um die Frequenz und/oder Leistung von Signalen in Drahtloskommunikationssystemen zu messen.

5. Messvorrichtung (10) nach einem der Ansprüche 1 bis 4,
wobei die Messvorrichtung (10) einen Signalgenerator umfasst oder ein solcher ist, der insbesondere verwendet wird, um Prüfsignale zum Prüfen und/oder Kalibrieren von Kommunikationssystemen zu erzeugen.

6. Messvorrichtung (10) nach einem der Ansprüche 1 bis 5,
wobei die Messvorrichtung (10) einen Netzwerkanalysator umfasst oder ein solcher ist, der insbesondere verwendet wird, um die Merkmale von Kommunikationsnetzwerken wie Frequenzgang und/oder Einfügungsdämpfung zu messen.

7. Messvorrichtung (10) nach einem der Ansprüche 1 bis 6,
wobei die Messvorrichtung (10) ein Oszilloskop umfasst oder ist, das insbesondere verwendet wird, um die Spannungs- und/oder Zeitbereichsmerkmale elektrischer Signale zu messen.

8. Messvorrichtung (10) nach einem der Ansprüche 1 bis 7,
wobei die Messvorrichtung (10) einen Signalanalysator umfasst oder ein solcher ist, der insbesondere verwendet wird, um komplexe Signale in Drahtloskommunikationssystemen zu analysieren und/oder zu messen.

9. Messvorrichtung (10) nach einem der Ansprüche 1 bis 8,
wobei die Messvorrichtung (10) einen Leistungsmesser und/oder einen Sensor umfasst oder ein solcher ist, der insbesondere verwendet wird, um die Leistung von Hochfrequenz- und/oder Mikrowellensignalen zu messen.

10. Messvorrichtung (10) nach einem der Ansprüche 1 bis 9,
wobei die Messvorrichtung (10) einen Vektor-Netzwerkanalysator umfasst oder ein solcher ist, der insbesondere verwendet wird, um die Streuungsparameter von Mikrowellenkomponenten zu messen.

11. Verfahren zum Fernbedienen einer Messvorrichtung (10), das Verfahren umfassend die Schritte:
Fernaktivieren (21) der Messvorrichtung (10) durch eine Wake-on-Netzwerkeinheit (11) der Messvorrichtung (10), wobei die Wake-on-Netzwerkeinheit (11) **durch** das Umfassen eines Power-over-Ethernet-Anschlusses (14) **gekennzeichnet** ist, und
Verwenden (22) einer Fernsteuerungsschnittstelle (12) der Messvorrichtung (10), um die Funktionen und/oder Einstellungen der Messvorrichtung (10) fernzusteuern, nachdem die Messvorrichtung (10) aktiviert wurde,
Extrahieren von Energie aus dem entsprechenden Ethernet-Netzwerk mithilfe der Wake-on-Netzwerkeinheit (11), und
Versorgen der Messvorrichtung (10) mit Leistung auf der Basis der Energie.

12. Computerlesbares Medium, das computerausführbare Anweisungen speichert zum Durchführen des Verfahrens nach Anspruch 11, wenn sie durch einen Computer ausgeführt werden.

13. Messsystem (30), umfassend:
mindestens eine Messvorrichtung (10) nach einem der Ansprüche 1 bis 10, und
eine Fernsteuerungsvorrichtung (31), die mit dem Internet (32) und/oder mindestens einer von der mindestens einen Messvorrichtung (10) kommuniziert.

## Revendications

1. Dispositif de mesure (10) comprenant :
une unité de réveil sur réseau (11) permettant d'activer à distance le dispositif de mesure (10), et
une interface de télécommande (12) permettant de télécommander les fonctions et/ou les réglages du dispositif de mesure (10) après que le dispositif de mesure (10) a été activé par l'intermédiaire de l'unité de réveil sur réseau (11),
**caractérisé en ce que**
l'unité de réveil sur réseau (11) comprend un port Power over Ethernet (14), et
dans lequel l'unité de réveil sur réseau (11) est configurée pour extraire l'énergie du réseau Ethernet correspondant et pour alimenter le dispositif de mesure (10) avec du courant sur la base de ladite énergie.

2. Dispositif de mesure (10) selon la revendication 1,
dans lequel l'unité de réveil sur réseau (11) comprend ou est une unité de réveil sur réseau local.

3. Dispositif de mesure (10) selon la revendication 1 ou 2,
dans lequel le dispositif de mesure (10) et/ou l'unité de réveil sur réseau (11) comprennent une prise de courant pouvant être télécommandée (13).

4. Dispositif de mesure (10) selon l'une quelconque des revendications 1 à 3,
dans lequel le dispositif de mesure (10) comprend ou est un analyseur de spectre spécialement utilisé pour mesurer la fréquence et/ou la puissance de signaux dans des systèmes de communication sans fil.

5. Dispositif de mesure (10) selon l'une quelconque des revendications 1 à 4,
dans lequel le dispositif de mesure (10) comprend ou est un générateur de signaux spécialement utilisé pour générer des signaux de test pour tester et/ou étalonner des systèmes de communication.

6. Dispositif de mesure (10) selon l'une quelconque des revendications 1 à 5,
dans lequel le dispositif de mesure (10) comprend ou est un analyseur de réseau spécialement utilisé pour mesurer les caractéristiques des réseaux de communication telles que la réponse en fréquence et/ou la perte d'insertion.

7. Dispositif de mesure (10) selon l'une quelconque des revendications 1 à 6,
dans lequel le dispositif de mesure (10) comprend ou est un oscilloscope spécialement utilisé pour mesurer les caractéristiques de tension et/ou de domaine temporel de signaux électriques.

8. Dispositif de mesure (10) selon l'une quelconque des revendications 1 à 7,
dans lequel le dispositif de mesure (10) comprend ou est un analyseur de signaux spécialement utilisé pour analyser et/ou mesurer des signaux complexes dans des systèmes de communication sans fil.

9. Dispositif de mesure (10) selon l'une quelconque des revendications 1 à 8,
dans lequel le dispositif de mesure (10) comprend ou est un wattmètre et/ou un capteur spécialement utilisé pour mesurer la puissance de signaux radiofréquence et/ou micro-ondes.

10. Dispositif de mesure (10) selon l'une quelconque des revendications 1 à 9
dans lequel le dispositif de mesure (10) comprend ou est un analyseur de réseau vectoriel spécialement utilisé pour mesurer des paramètres de diffusion de composants micro-ondes.

11. Procédé de fonctionnement à distance d'un dispositif de mesure (10), le procédé comprenant les étapes consistant à :
activer à distance (21) le dispositif de mesure (10) par l'intermédiaire d'une unité de réveil sur réseau (11) du dispositif de mesure (10), l'unité de réveil sur réseau (11) étant **caractérisée en ce qu'**elle comprend un port Power over Ethernet (14), et
utiliser (22) une interface de télécommande (12) du dispositif de mesure (10) pour télécommander les fonctions et/ou les réglages du dispositif de mesure (10) après que le dispositif de mesure (10) a été activé,
extraire de l'énergie du réseau Ethernet correspondant à l'aide de l'unité de réveil sur réseau (11), et
alimenter le dispositif de mesure (10) avec du courant sur la base de ladite énergie.

12. Support lisible par ordinateur stockant des instructions exécutables par ordinateur pour réaliser le procédé selon la revendication 11 lorsqu'elles sont exécutées par un ordinateur.

13. Système de mesure (30) comprenant :
au moins un dispositif de mesure (10) selon l'une quelconque des revendications 1 à 10, et
un dispositif de télécommande (31) communiquant avec l'Internet (32) et/ou au moins l'un de l'au moins un dispositif de mesure (10).
